# EUROPEAN PATENT SPECIFICATION

(11) **EP 0 610 689 B1**
(45) Date of publication and mention of the grant of the patent: **09.10.1996**
(21) Application number: 94100681.9
(22) Date of filing: 19.01.1994
(51) Int. Cl.: H01H 9/02, H01H 13/70

(54) **Container for electrical or electronic equipments**
Behälter für elektrische oder elektronische Teile
Boîtier pour équipement électrique ou électronique

(30) Priority: 11.02.1993 IT MI930245
(43) Date of publication of application: 17.08.1994
(73) Proprietor: SEDI srl, I-84043 Agropoli (SA) (IT)
(72) Inventor: Palma, Giovanni, I-84043 Agropoli (SA) (IT)
(74) Representative: Petruzziello, Aldo

(56) References cited:
- DE-A- 3 603 641
- DE-A- 4 215 041
- DE-U- 8 707 728
- FR-A- 2 634 617
- GB-A- 2 046 519
- US-A- 4 811 165

## Description

The present invention refers to a container for electrical or electronic equipments, particularly, but not necessarily, equipments comprising a keystrip, such as remote controls, calculators, cellular telephones, personal computer keyboards etc.

Electrical equipment of the above-mentioned type is realized by making the relative electronic component parts normally on a printed circuit, which is housed in a container and closed with a cover, from which the control keys of the equipment protrude.

The electrical or electronic equipment thus realized is often housed in a further protective outer shell.

This technique is rather complicated and expensive, and the results it gives are not completely satisfactory. For example, it does not guarantee proof against dust, or against liquids, especially in correspondence with the keys, if these are foreseen protruding from the surface of the cover.

DE-U 8 707 728 describes a container for electrical equipments, comprising a central body for housing the equipments, and two lateral walls which close the central body engaging onto it with snap action means.

The aim of the invention is to provide a container for electrical or electronic equipments of the above-mentioned type, which is of highly innovative conception and will be simple to construct at low cost, will give excellent proof against the infiltration of dust and liquids, and which will incorporate at least one keystrip, if needed.

The container according to the invention comprises the features of claim 1.

Conveniently, the electrical components of the equipment are contained on a printed circuit, which is housed in the said rigid central structure, made of nylon, PVC, ABS, aluminium or similar materials. Advantageously the central structure is perfectly symmetrical with respect to the horizontal median plane, in such a way as to be able to house, when needed, two printed circuit plates in correspondence with its two opposed faces, plates which are held by flexible tongues made on the same rigid structure.

In the event of the electrical equipment comprising control keys, which is the most common case, the keys are made directly on one of the two covers, which are preferably made in silicone rubber of hardness predetermined according to the requirements of their use.

If the central rigid structure contains two opposed printed circuit plates, keys can be foreseen on both the covers, which possibly can be perfectly identical with each other.

Further characteristics of a container according to the invention will be made clearer by the detailed description given below, referring to one of its purely exemplary, and therefore not restrictive, embodiments, illustrated in the appended drawings, and in which:

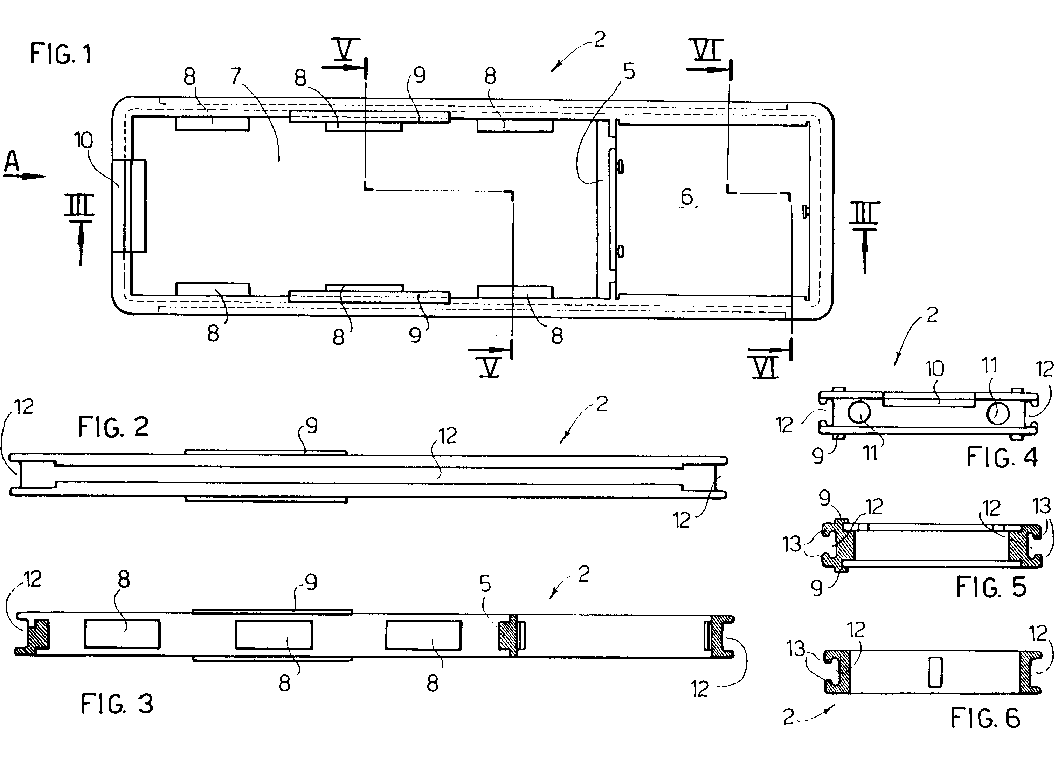

figure 1 is a top plan view of the rigid central structure of the container according to the invention, the bottom plan view being the same;
figure 2 is a side view of the container in figure 1, the view from the opposite side being the same;
figure 3 is a section taken along line III-III in figure 1;
figure 4 is a front view taken in the direction of the arrow A in figure 1;
figures 5 and 6 are sectional views taken respectively along lines V-V and VI-VI in figure 1;

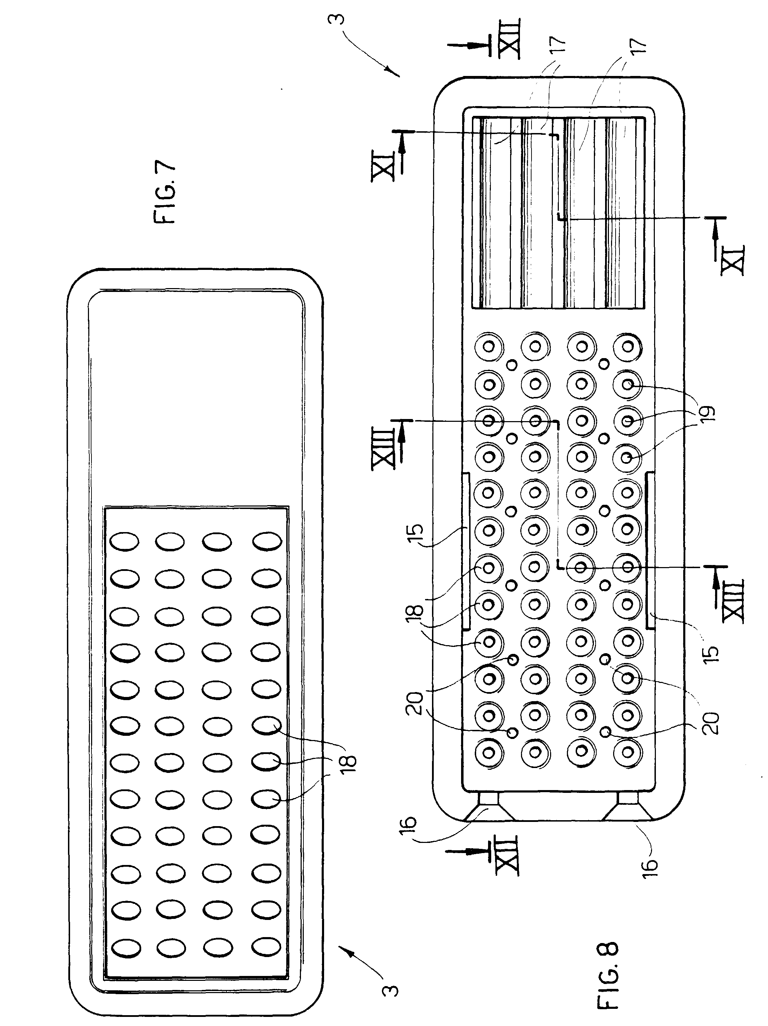

figure 7 is a plan view from outside of a cover of the container according to the invention, provided with a key strip;
figure 8 is a plan view of the inner side of the cover in figure 7;
figure 9 is a side view of two overlapping covers in the position for use, of the container according to the invention;
figure 10 is a frontal view taken in the direction of the arrow B in figure 9;
figure 11 is a section of the two overlapping covers taken along line XI-XI in figure 8 ;
figure 12 is a longitudinal section taken along line XII-XII in figure 8, showing the upper cover provided with a keystrip and the lower cover acting simply as a cover element of the rigid central structure;
figure 13 is a section taken along line XIII-XIII in figure 8, with the same covers shown in figure 12;
figures 14 and 15 are sections analogous to those in figures 12 and 13, with the rigid central plate also inserted;
figures 16 and 17 are sectional views analogous to those in figures 12 and 13 respectively, illustrating a different realization of the keys.

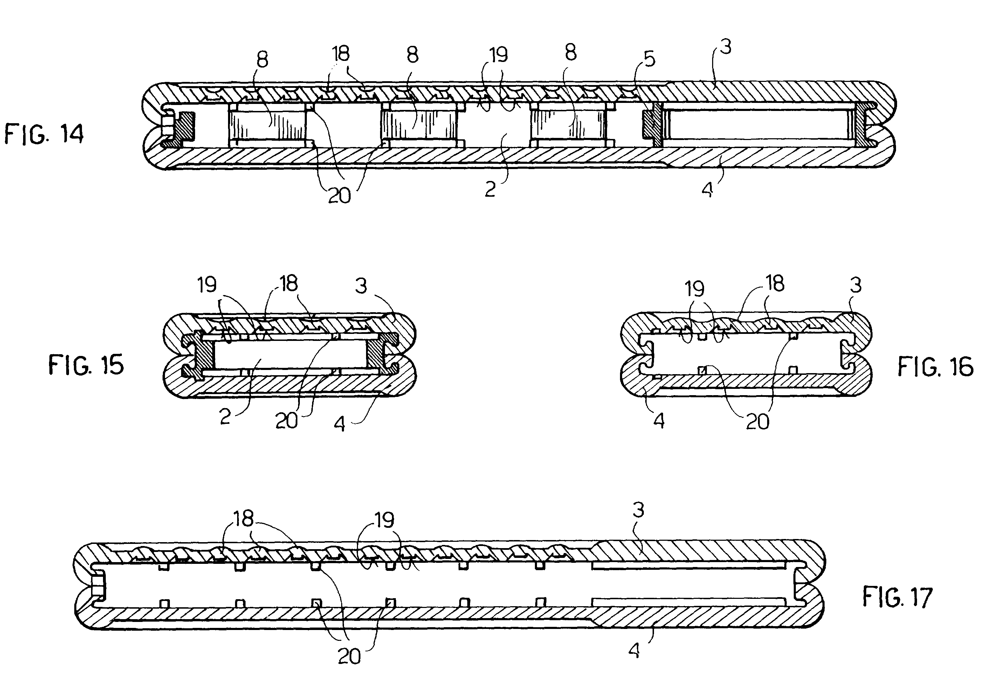

With reference to such figures, the container for electrical or electronic equipments according to the invention is shown as a whole with reference numeral 1 (figures 14 and 15).

It substantially comprisies a rigid central structure 2 (figures from 2 to 6), for example in nylon, PVC, ABS, aluminium and similar materials, and two covers 3, 4 (see in particular the figures from 7 to 11), made of relatively elastic material, for example silicone rubber with hardness predetermined according to the requirements of its use.

The rigid central structure 2 substantially is in the shape of a rectangular frame and preferably is perfectly symmetrical with respect to the horizontal median plane and to the vertical longitudinal median plane.

From the example shown in the appended figures, the frame structure 2 is divided into two parts by means of an intermediate bulkhead 5, in such a way as to determine a space 6 intended, for example, to house the feeder batteries of the electrical or electronic equipment, and a space 7 for housing the electronic component parts, in particular in the form of a printed circuit plate.

In particular, the frame 2 has several inner projections 8 in correspondence with the space 7, which are intended to support a printed circuit plate, whether on one side or the other being a matter of indifference. Obviously two printed circuit plates (not shown) can be foreseen, one on each side of the support projections 8. Still in correspondence with the space 7, from the upper edge and the lower edge of the opposite sides of the frame 2, elastic tongues 9 project internally, suitable to allow a corresponding printed circuit plate to be introduced and locked.

On the front part of the frame 2 a window 10 is foreseen for a possible connector for connecting with the outside. At the two sides of the window 10 two circular holes 11 are foreseen for housing, for example, an infrared ray transmitter and a LED indicator of the state of the equipment.

On the perimeter of the rigid structure 2 a groove 12 is foreseen, in such a way as to determine a substantially C-shaped section of the side of the frame, with two vertical extensions 13, which substantially concern the longitudinal sides of the frame itself.

With reference to the figures from 9 to 13, a description will now be given in greater detail of the covers 3 and 4 intended for closing the frame 2 at the top and from below.

The upper cover 3 consists of a diaphragm, preferably of silicone rubber, rectangular in shape and whose plan dimensions are slightly larger than those of the frame 2, so that it can cover the latter when it is in use. For this purpose, the cover 3 has a perimetral edge 14, folded inwards so as to engage in the groove 12 of the rigid frame structure 2.

In correspondence with the inner parts of its longitudinal sides, the cover 3 has respective notches 15, intended to receive the projecting tongues 9 of the frame 2, while two half-holes 16 are foreseen in correspondence with the front side, with truncated cone shaped mouths , which, in their mounted position, are located in correspondence with the holes 11 of the frame 2 and, together with the lower cover 4, determine housings for the transmission and state LEDs.

Inside the cover 3, in correspondence with the part intended to come into position above the space 6 of the frame 2, semicylindrical housings 17 are foreseen for the feeder batteries, while, in correspondence with the part intended to cone into position above the space 7 containing the printed circuit plate, several keys 18 are foreseen, with respective underlying electric contacts 19. Inside the cover 3 two rows of small pins are also foreseen, suitable to hook into corresponding holes foreseen on the underlying printed circuit plate (not shown).

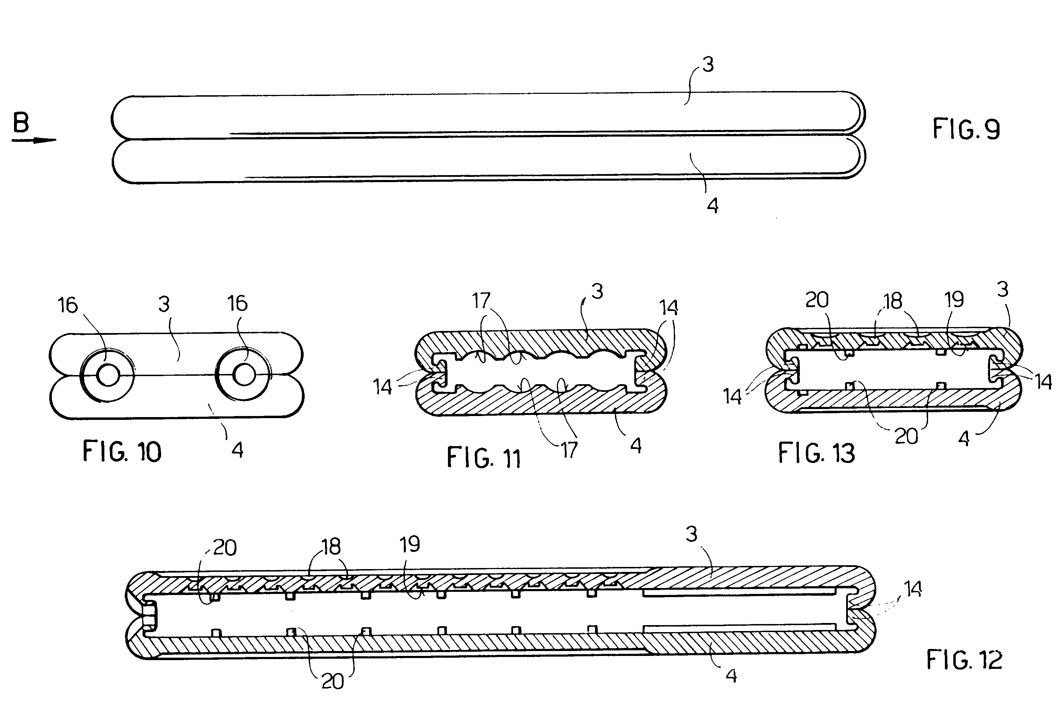

According to the embodiment shown in the sections in figures 12 and 13, the upper surface of the keys 18 is concave, while in the embodiment in figures 16 and 17 it protrudes outwards. In both cases, however, the outer surface of the keys 18 does not protrude beyond the outer contour of the cover 3, so as to avoid such keys being operated accidentally when the container is laid on a surface with the keys facing downwards.

The cover 4 shown in the appended figures represents the flat outer surface, and acts in such case solely as a cover element.

However, it is obvious that the cover 4 can also be provided with keys, and in particular be identical with cover 3, in the case where two opposed printed circuit plates are foreseen on the rigid central structure.

Similarly, it is obvious that both the covers 3 and 4 can be without keys, in the case where it is simply desired to cover the component parts of the electrical or electronic equipment to be protected, which is connected to other equipment or simply to an electrical supply by means of a connector housed in the window 10. The most important applications foresee, however, that at least one of the covers 3 or 4 is provided with keys 18, so that it can act, for instance, as a remote control for a television set, audio and video, as an antitheft remote control for cars, as a remote control for automatic gates, as an electronic calculator, as a personal computer keyboard and so on.

The symmetry of the container allows use to be made of both its faces, as previously described.

The covers 3 and 4, made of shock-resistant material, provide an excellent protection for the "vital" part of the electrical or electronic equipment contained inside it, even in the case of accidental impacts.

They produce practically hermetic closure of the container, and eliminate any infiltration whatsoever of dust or liquids.

Of course, the invention is not limited to the particular embodiments previously described and illustrated in the appended drawings, but many modifications can be made to its details which are within the scope of the invention as defined by the claims.

## Claims

1. A container for electrical or electronic equipments, comprising a substantially rigid central structure (2) having means for mounting the component parts of the equipment, and two covers, an upper one (3) and a lower one (4), characterized in that said central structure (2) consists of a frame with an outer perimetral groove (12) and said covers (3, 4) are of substantially elastic material and lock onto the said frame, closing it in a sandwich, by the peripheral edges (14) of said covers (3, 4) hooking around the central structure in engagement with said outer peripheral groove (12).

2. A container according to claim 1, wherein such frame is rectangular in shape.

3. A container according to claim 1 or 2, characterized in that the said central structure (2) is substantially symmetrical with respect to a horizontal median plane, and has internal projections (8) for the support, on both sides, of a respective printed circuit plate containing the said component parts.

4. A container according to claim 3, characterized in that flexible tongues (9) are foreseen on the opposed side edges of the said central structure (2), for allowing the insertion and locking of the said printed circuit plates.

5. A container according to any one of the previous claims, characterized in that the said central structure (2) is substantially symmetrical with respect to the vertical longitudinal median plane.

6. A container according to any one of the previous claims, characterized in that the said central structure (2) is divided into two spaces (6, 7) by an intermediate bulkhead (5), the said spaces being intended to receive, respectively, the feeder batteries of the equipment and the printed circuit plate or plates, the said structure (2) having in addition a window (10) and/or holes (11) for housing an electrical connector and LEDs, respectively.

7. A container according to any one of the previous claims, characterized in that at least one of the said covers (3. 4) has keys (18) with underlying electrical contacts (19) for closing corresponding contacts of the printed circuit plate.

8. A container according to claim 7, characterized in that the outer surface of the said keys (18) is concave.

9. A container according to any one of the claims from 1 to 7, characterized in that the outer surface of the said keys (18) is convex.

10. A container according to any one of the claims from 7 to 9, characterized in that the outer surface of the said keys (18) does not protrude beyond the outer surface of the said cover (13) or (14).

11. A container according to any one of the previous claims, characterized in that the said rigid central structure (2) is made of nylon, PVC, ABS, aluminium or similar materials.

12. A container according to any one of the previous claims, characterized in that the said covers (3. 4) are made of silicone rubber.

## Patentansprüche

1. Behälter für elektrische oder elektronische Ausrüstungen, bestehend aus einer grundlegend steifen Hauptstruktur (2) mit Vorrichtungen zur Montage der Komponenten der Ausrüstung und zwei Deckeln, einem oberen (3) und einem unterem (4), dadurch gekennzeichnet, daß die genannte Hauptstruktur (2) aus einem Rahmen mit einer äußeren Nut (12) besteht und die genannten Deckel (3, 4) grundlegend aus elastischem Material sind und mittels der Außenränder (14) der genannten Deckel (3, 4), die sich in die genannte äußere Nut der Hauptstruktur einpassen, an der Hauptstruktur befestigt werden und diese sandwichartig schließen.

2. Behälter gemäß Anspruch 1, in dem die Form der genannten Struktur rechteckig ist.

3. Behälter gemäß Anspruch 1 oder 2, dadurch gekennzeichnet, daß die genannte Hauptstruktur (2) grundlegend zu einer horizontalen Mittelebene symmetrisch, und mit inneren Vorsprüngen (8) für den beidseitigen Support entsprechender gedruckter Schaltplatten mit den genannten Komponenten, versehen ist.

4. Behälter gemäß Anspruch 3, dadurch gekennzeichnet, daß an den gegenüberliegenden Seiten der genannten Hauptstruktur (2) flexible Klappen (9) vorgesehen sind, um das Einsetzen und Befestigen der genannten gedruckten Schaltplatten zu ermöglichen.

5. Behälter gemäß einem beliebigen der vorangegangenen Ansprüche, dadurch gekennzeichnet, daß die genannte Hauptstruktur (2) grundlegend zur vertikalen Längsmittelebene symmetrisch ist.

6. Behälter gemäß einem beliebigen der vorangegangenen Ansprüche, dadurch gekennzeichnet, daß die genannte Hauptstruktur (2) durch eine Zwischenwand (5) in zwei Fächer (6, 7) unterteilt ist, die zur Aufnahme der Speisebatterien der Ausrüstung beziehungsweise der gedruckten Schaltplatte oder Schaltplatten dienen, und die genannte Struktur (2) mit einem kleinem Fenster (10) und/oder Bohrungen (11) für die Unterbringung eines elektrischen Verbinders beziehungsweise von Leds versehen ist.

7. Behälter gemäß einem beliebigen der vorangegangenen Ansprüche, dadurch gekennzeichnet, daß zumindest einer der genannten Deckel (3,4) Tasten (18) mit darunterliegenden elektrischen Kontakten (19) aufweist, die zur Schließung entsprechender Kontakte der gedruckten Schaltplatte dienen.

8. Behälter gemäß Anspruch 7, dadurch gekennzeichnet, daß die äußere Oberfläche der genannten Tasten (18) vertieft ist.

9. Behälter gemäß einem beliebigen der vorangegangenen Ansprüche 1 bis 7, dadurch gekennzeichnet, daß die äußere Oberfläche der genannten Tasten (18) gewölbt ist.

10. Behälter gemäß einem beliebigen der vorangegangenen Ansprüche 7 bis 9, dadurch gekennzeichnet, daß die äußere Oberfläche der genannten Tasten (18) nicht über die äußere Oberfläche des genannten Deckels (13) oder (14) herausragt.

11. Behälter gemäß einem beliebigen der vorangegangenen Ansprüche, dadurch gekennzeichnet, daß die steife Hauptstruktur (2) aus Nylon, PVC, ABS, Aluminium oder ähnlichen Materialien hergestellt wird.

12. Behälter gemäß einem beliebigen der vorangegangenen Ansprüche, dadurch gekennzeichnet, daß die genannten Deckel (3, 4) aus Silikongummi hergestellt werden.

## Revendications

1. Conteneur pour appareils électriques ou électroniques, comprenant une structure centrale substantiellement rigide (2) équipée d'éléments pour monter les composants de l'appareil et deux couvercles, un supérieur (3) et un inférieur (4), caractérisé par le fait que la structure centrale (2) se compose d'un châssis ayant une rainure périmétrique extérieure (12) et que lesdits couvercles (3, 4) sont en matière substantiellement élastique et se bloquent sur ladite structure qu'ils ferment en sandwich, grâce aux bords périphériques (14) desdits couvercles (3, 4) qui se bloquent sur ladite structure centrale engagée dans ladite rainure périmétrique extérieure.

2. Conteneur selon la revendication 1, dans lequel ladite structure a une forme rectangulaire.

3. Conteneur selon la revendication 1 ou 2, caractérisé par le fait que ladite structure centrale (2) est substantiellement symétrique par rapport à un plan médian horizontal et qu'elle présente à l'intérieur des saillies (8) pour le support, des deux côtés, d'une plaque respective de circuit imprimé, contenant lesdits composants.

4. Conteneur selon la revendication 3, caractérisé par le fait que des ailettes flexibles (9) sont prévues sur les bords latéraux opposés de ladite structure centrale (2) pour permettre l'introduction et le blocage desdites plaques de circuit imprimé.

5. Conteneur selon une revendication quelconque des revendications précédentes, caractérisé par le fait que ladite structure centrale (2) est substantiellement symétrique par rapport au plan médian longitudinal vertical.

6. Conteneur selon une revendication quelconque des revendications précédentes, caractérisé par le fait que ladite structure centrale (2) est divisée en deux compartiments (6, 7) par une paroi intermédiaire (5), destinés à accueillir respectivement les batteries d'alimentation de l'appareil et la ou les plaques de circuit imprimé, ladite structure (2) présentant également une petite fenêtre (10) et/ou des trous (11) pour le logement, respectivement, d'un connecteur électrique et de LED.

7. Conteneur selon une revendication quelconque des revendications précédentes, caractérisé par le fait qu'au moins un desdits couvercles (3, 4) présente des touches (18) en dessous desquelles se trouvent des contacts électriques (19) pour la fermeture de contacts correspondants de la plaque de circuit imprimé.

8. Conteneur selon la revendication 7, caractérisé par le fait que la surface extérieure desdites touches (18) est concave.

9. Conteneur selon une revendication quelconque des revendications de 1 à 7, caractérisé par le fait que la surface extérieure desdites touches (18) est convexe.

10. Conteneur selon une revendication quelconque des revendications de 7 à 9, caractérisé par le fait que la surface extérieure desdites touches (18) ne dépasse pas de la surface extérieure dudit couvercle (13) ou (14).

11. Conteneur selon une revendication quelconque des revendications précédentes, caractérisé par le fait que ladite structure centrale rigide (2) est réalisée en nylon, en PVC, en ABS, en aluminium ou matières analogues.

12. Conteneur selon une revendication quelconque des revendications précédentes, caractérisé par le fait que lesdits couvercles (3, 4) sont réalisés en caoutchouc siliconé.
